Europäisches Patentamt

European Patent Office

Office européen des brevets

(11) Publication number: 0 400 896 A2

# EUROPEAN PATENT APPLICATION

(21) Application number: 90305652.1

(22) Date of filing: 24.05.90

(51) Int. Cl.5: G02B 6/42

(30) Priority: 30.05.89 GB 8912376

(43) Date of publication of application:
05.12.90 Bulletin 90/49

(84) Designated Contracting States:
DE FR GB NL

(71) Applicant: HUGHES MICROELECTRONICS
LIMITED
Queensway Industrial Estate
Glenrothes Fife KY7 5PY Scotland(GB)

(72) Inventor: West, James Lionel
7 Balcombie Road
Kirkaldy, Fife(GB)
Inventor: Bradley, Laurence Daniel
19 Scotmill Way
Inverkeithing, Fife(GB)

(74) Representative: Colgan, Stephen James et al
CARPMAELS & RANSFORD 43 Bloomsbury
Square
London WC1A 2RA(GB)

(54) Photelectric components.

(57) This invention relates to photoelectric components and particularly those in which optical fibres are terminated at photoelectric devices mounted on hybrid circuit substrates. It addresses the problem of transferring efficiently the fibre signal to the circuit substrate when the plane of the photoelectric device is orthogonal to that of the substrate and where the fibre is parallel to the substrate. A photoelectric component according to the invention comprises a generally-planar hybrid circuit substrate 26 having a mounting block 10 attached thereto, the block 10 receiving in an orifice 12 thereof an optical fibre 20 extending generally parallel to the plane of the substrate 26, and a photoelectric device 24 arranged to act as an interface for optical signals on the fibre 20 and electrical signals on the circuit substrate 26. The photoelectric device 24 is mounted on a face of the mounting block 10 orthogonal to the plane of substrate 26. A method of manufacturing the component is also disclosed, which comprises the steps of forming the orifice 12 in the mounting block 10, mounting the optical fibre 20 within the orifice 12 and mounting the photoelectric device 24 to a face of the mounting block 10, in either order, and bonding the assembly of mounting block 10, fibre 20, and photoelectric device 24 to the substrate 26.

Fig.4.

EP 0 400 896 A2

This invention relates to photoelectric components and particularly those in which optical fibres are terminated at photoelectric devices mounted on hybrid circuit substrates. It relates to the devices per se and to a method of their production.

When it is desired to terminate an optical fibre at a generally-planar hybrid circuit substrate, means in the form of a photoelectric device (e.g. a photodetector such as a photodiode) must be provided to convert the optical signal from the fibre to an electrical signal for components mounted on the hybrid circuit, or vice-versa. A problem exists in being able to transfer efficiently the fibre signal to the circuit substrate when the plane of the photoelectric device is orthogonal to that of the substrate and where the fibre is parallel to the substrate.

The present invention provides a simple technique for overcoming the problem and enables a component to be provided which has high mechanical rigidity and good electrical contact across the fibre/substrate interface.

According to the present invention there is provided a photoelectric component comprising a generally-planar hybrid circuit substrate having a mounting block attached thereto, said block receiving in an orifice thereof an optical fibre extending generally parallel to the plane of the substrate, and a photoelectric device arranged to act as an interface for optical signals on said fibre and electrical signals on said circuit substrate, said device being mounted on a face of said mounting block orthogonal to said substrate plane.

According to a further aspect of the invention there is provided a method of manufacturing a component as specified in the preceding paragraph, which comprises:
forming said orifice in said mounting block;
mounting said optical fibre within said orifice and mounting said photoelectric device to a face of the mounting block, in either order; and
bonding the assembly of mounting block, fibre, and photoelectric device to said substrate.

Preferably the photoelectric device is a photodetector, so that the component is employed to receive optical signals from the fibre and convert them to electrical signals.

The mounting block and substrate are both preferably ceramic, and are preferably bonded together by electrically-conductive bonding means such as solder.

The orifice in the mounting block is preferably tapered to assist in location and alignment of the optical fibre, and is preferably formed by laser drilling.

Preferred features of the invention will now be described, by way of example, with reference to the accompanying drawings wherein:

Figure 1 is a plan view of a mounting block used in the present invention;

Figure 2 is a perspective view of a portion of the mounting block of Figure 1;

Figure 3 is a cross-sectional view of the mounting block of Figure 1 looking in the direction A-A;

Figure 4 is a cross-sectional view of a preferred photoelectric component according to the invention;

Figure 5 is a cross-sectional view of the component of Figure 4 in assembled form with a casing and connector pins; and

Figure 6 is a plan view of a sheet of a plurality of mounting blocks, illustrating their process of construction.

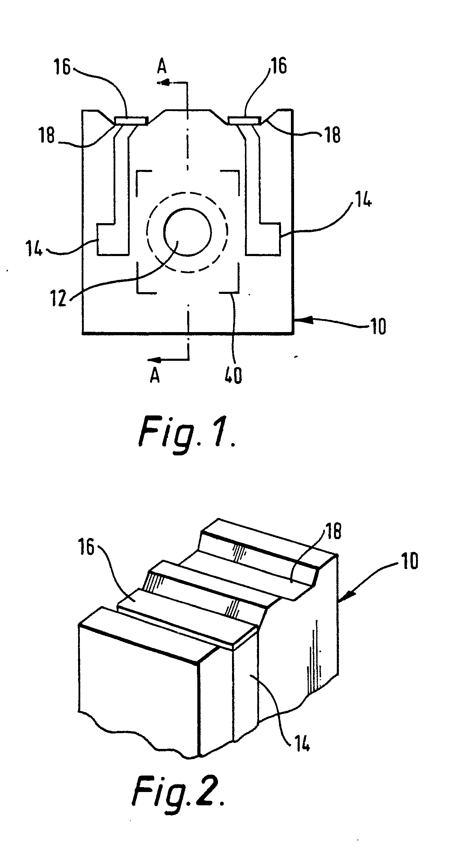

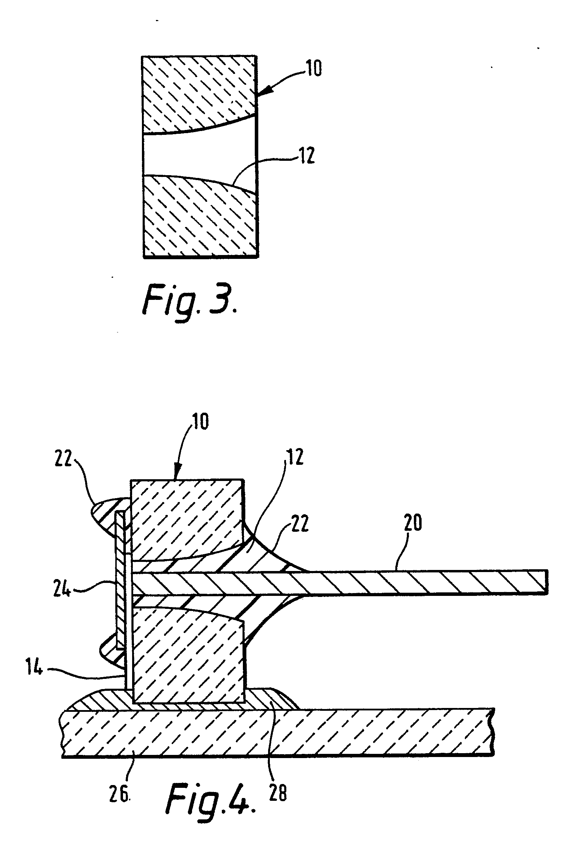

Referring to the drawings, Figures 1, 2 and 3 show a mounting block 10 made of ceramics material which forms part of the complete photoelectric component and to which an optical fibre 20 (not shown in Figures 1 to 3) can be rigidly affixed. To this end, the mounting block 10 is provided with an orifice 12 which is tapered as shown in Figure 3.

The tapering not only facilitates the initial engagement of the fibre 20 within the orifice 10, but also serves to guide the fibre 20 so as to facilitate its complete insertion (see Figure 4).

A series of surface conductors 14 are affixed to the surface of the mounting block 10. Wrap-around conductors 16 are located within lateral grooves 18 formed across one edge of the mounting block 10. Figure 2 shows in more detail the layout of the surface conductors 14 and wrap-around conductors 16 (only one of each being shown in this Figure).

Referring now to Figure 4, the photoelectric component comprises a metal-clad optical fibre 20 securely affixed within the tapered orifice 12 with epoxy adhesive 22. The fibre 20 extends through the orifice 12 but does not project therefrom at one end, being substantially flush with one face of the mounting block 10. A photodetector 24, for detecting optical information from the optical fibre 20 and converting it into electrical information, is affixed to the mounting block 10 as shown in Figure 4, for example with conductive epoxy adhesive, with the light detecting plane of the detector 24 perpendicular to the longitudinal axis of the optical fibre 20. The detector 24 may be electrically connected to the surface conductors 14 with indium-bump attachments, bond wires, or a combination thereof. The detector 24 may be fixed to the mounting block 10 either before or after the optical fibre 20 is affixed within orifice 12.

The mounting block 10 is bonded onto a hybrid circuit substrate 26, made of ceramics material, with solder 28. The solder 28 not only mechanically bonds the mounting block 10 to the substrate 26, but also provides an electrical connection therewith, the wrap-around conductors 16 (not shown in Figure 4) forming electrical connections with appropriate connectors (also not shown) in the substrate 26, so that electrical information can be transmitted from the detector 24 to the substrate 26, via the surface conductors 14 and wrap-around conductors 16.

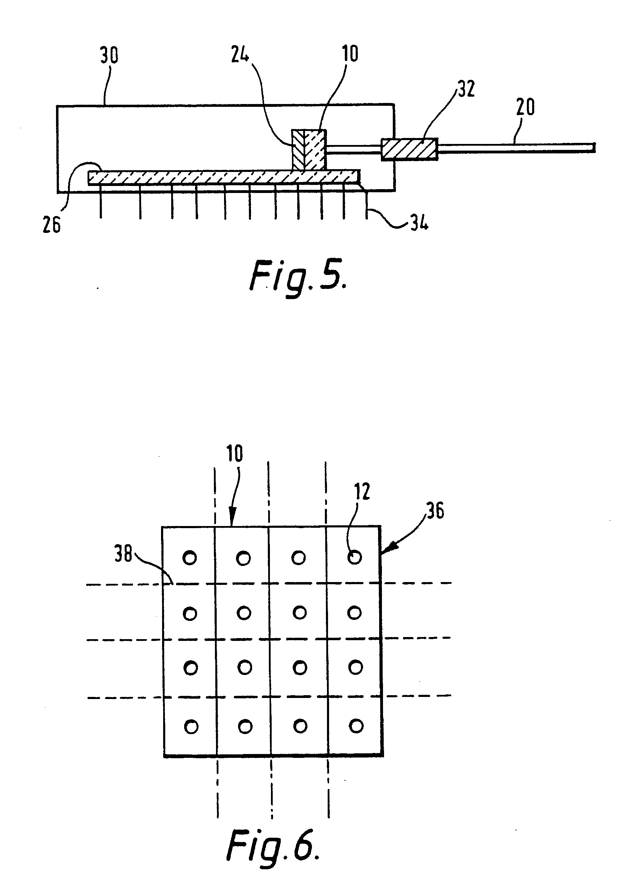

Referring now to Figure 5, the complete substrate 26 and mounting block 10 unit shown in Figure 4 is hermetically housed within a casing 30. A hermetical seal is made between the casing 30 and the optical fibre 20 by soldering the metal-clad fibre 20 to the casing 30 at 32. A series of conductor pins 34, for transmitting electrical information from the substrate 26 to external circuitry, project through the base of the casing 30, and are hermetically sealed thereto.

The process of manufacturing the mounting block 10 is now described with reference to the Figure 6. A sheet 36 of ceramic material is made into a plurality of adjoining mounting blocks 10 by first laser drilling a series of perforations 38 in the sheet 36, these perforations 38 forming lines of weakness which will eventually allow the sheet 36 to be snapped into individual mounting blocks 10. Each mounting block is then patterned with surface conductors 14, wrap-around conductors 16 and registration marks 40 for laser drilling (see Figure 1). A series of orifices 12 are then laser drilled into the sheet 36, the power and focusing of the laser being adjusted during the drilling process to produce a tapered effect as shown, for example, in Figure 3. Referring again to Figure 6, the sheet 36 is then cut in the direction of the vertical chain dotted lines and snapped in the direction of the horizontal dotted lines, to yield individual mounting blocks 10.

It will be appreciated that the individual mounting blocks 10, once separated from the sheet 36, possess grooves by virtue of the perforations 38. These grooves are actually the grooves 18 in which the wrap-around conductors 16 are located.

It will of course be understood that the present invention has been described purely by way of example, and modifications of detail can be made within the scope of the invention.

## Claims

1. A photoelectric component comprising a generally-planar hybrid circuit substrate having a mounting block attached thereto, said block receiving in an orifice thereof an optical fibre extending generally parallel to the plane of the substrate, and a photoelectric device arranged to act as an interface for optical signals on said fibre and electrical signals on said circuit substrate, said device being mounted on a face of said mounting block orthogonal to said substrate plane.

2. A component according to claim 1 wherein the substrate and mounting block are ceramic.

3. A component according to claim or 2 wherein the mounting block is bonded to the substrate by electrically-conductive bonding means.

4. A component according to any of claims 1 to 3 wherein the optical fibre is adhesively-bonded in said orifice.

5. A component according to any of claims 1 to 4 wherein the optical fibre terminates flush with the face of the mounting block upon which the photoelectric device is mounted.

6. A component according to any of claims 1 to 5 wherein the orifice is tapered, the taper diverging in the direction away from the photoelectric device.

7. A component according to any of claims 1 to 6 wherein the photoelectric device is a photodetector.

8. A method of manufacturing a component as claimed in any of claims 1 to 7, which comprises:
forming said orifice in said mounting block;
mounting said optical fibre within said orifice and mounting said photoelectric device to a face of the mounting block, in either order; and
bonding the assembly of mounting block, fibre, and photoelectric device to said substrate.

9. A method according to claim 8 which comprises bonding the said assembly to said substrate with electrically-conductive solder.

10. A method according to claim 8 or 9 which comprises providing a sheet of material for forming a plurality of said mounting blocks, creating lines of weakness on said sheet to delineate individual mounting blocks, and breaking said sheet into said individual blocks.

11. A method according to claim 10 wherein the lines of weakness in the sheet are provided by creating holes therein by laser drilling.

12. A method according to claim 10 or 11 wherein electrical conductors and said orifices for each individual mounting block are formed on said sheet prior to breakage thereof into said individual blocks.

Fig.1.

Fig.2.

Fig. 3.

Fig.4.

Fig.5.

Fig.6.